# EUROPÄISCHE PATENTSCHRIFT

(11) **EP 0 703 338 B1**
(45) Veröffentlichungstag und Bekanntmachung des Hinweises auf die Patenterteilung: **07.04.1999**
(21) Anmeldenummer: 95114018.5
(22) Anmeldetag: 07.09.1995
(51) Int. Cl.: E05D 15/06, F16C 13/00, B60B 5/02

(54) **Laufrolle für eine Schiebetür**
Roller for sliding door
Rouleau pour porte coulissante

(30) Priorität: 22.09.1994 CH 2879/94
(43) Veröffentlichungstag der Anmeldung: 27.03.1996
(73) Patentinhaber: INVENTIO AG, CH-6052 Hergiswil (CH)
(72) Erfinder: Aubry, William, F-77000 Melun (FR)

(56) Entgegenhaltungen:
- EP-A- 0 343 351
- EP-A- 0 425 332
- EP-A- 0 582 178
- DE-A- 2 358 359
- GB-A- 399 120

## Beschreibung

Die Erfindung betrifft eine Laufrolle für eine Schiebetür, insbesondere für eine Aufzugsschiebetür bestehend aus einem Kugellager, dessen Innenring in Arbeitsstellung der Laufrolle mit einem die Schiebetür tragenden Hängebügel verbunden ist und aus mit dem Aussenring des Kugellagers verbundenen Flanschen, an deren peripheren Enden ein Reifen aus Kunststoffmaterial angeordnet ist, wobei der Reifen in Arbeitsstellung der Laufrolle beim Öffnen und Schliessen der Schiebetür auf einer Rollenbahn eines an einem Türschild angeordneten Trägers abrollt.

Aus der Schrift EP-A1-0 343 351 ist eine Laufrolle für eine Schiebetür insbesondere für eine Aufzugsschiebetür, bekannt geworden. Die Laufrolle wird von einer Führungsschiene gehalten und trägt mittels eines Türhängers einen Türflügel. Beim Öffnen und Schliessen der Aufzugsschiebetür rollt die Laufrolle auf einer Führungsschiene ab. Die Laufrolle besteht aus zwei Flanschen, einem Kugellager und einem Reifen. Die Flanschen umfassen hälftig den äusseren ringförmigen Käfig des Kugellagers und bilden peripher einen im Querschnitt U-förmigen Ring, in dem der Reifen mit einer Lauffläche angeordnet ist.

Ein Nachteil der bekannten Laufrolle liegt darin, dass der Reifen mit Lauffläche hinsichtlich mechanischer Standfestigkeit temperaturabhängig ist. Wird die Tür bei höheren Umgebungstemperaturen längere Zeit nicht benutzt, so wird der Reifen unter der Türlast deformiert, was zu unangenehmen Laufgeräuschen führt. Ausserdem erfüllen solche Reifen wegen ungenügender Feuerhemmung die Brandschutzbestimmungen von Aufzugsanlagen nicht.

Hier will die Erfindung Abhilfe schaffen. Die Erfindung, wie sie in den Ansprüchen gekennzeichnet ist, löst die Aufgabe, die Nachteile der bekannten Einrichtung zu vermeiden und eine Laufrolle vorzuschlagen, die den Anforderungen an Laufruhe und Feuerresistenz einer Schiebetür gerecht wird.

Einerseits verfügen feuerhemmende Kunststoffmaterialien für die Lauffläche einer Laufrolle nicht über die für Aufzugsschiebetüren notwendigen mechanischen Eigenschaften hinsichtlich Standfestigkeit und Lebensdauer. Andererseits brennen Kunststoffmaterialien, die mechanisch geeignet sind leicht und bestehen daher die Brandprüfung nicht. Die Erfindung erfüllt die Forderung nach einer mechanisch geeigneten Laufrolle und die Forderung nach einer feuerhemmenden Laufrolle gleichzeitig.

Die durch die Erfindung erreichten Vorteile sind im wesentlichen darin zu sehen, dass die erfindungsgemässe Laufrolle nur geringe Mengen an Kunststoffmaterialien aufweist ohne dass dadurch die mechanischen Eigenschaften hinsichtlich Standfestigkeit, Lebensdauer und Laufruhe eingeschränkt werden. Die in der Laufrolle eingesetzten geringen Mengen an Kunststoffmaterialien erlauben die Verwendung von mechanisch geeigneten Kunststoffmaterialien, die nicht besonders feuerresistent sind. Weiter vorteilhaft ist, dass der Aufbau der erfindungsgemässen Laufrolle auf alle Laufrollendurchmesser anwendbar ist, was sich wiederum dank Massenproduktion günstig auf die Herstellungskosten auswirkt.

Im folgenden wird die Erfindung anhand von lediglich einen Ausführungsweg darstellenden Zeichnungen näher erläutert.
Es zeigen:
- Fig. 1: eine schematische Darstellung einer Aufzugsschiebetür mit einer erfindungsgemässen Laufrolle,
- Fig. 2: eine Frontansicht der erfindungsgemässen Laufrolle,
- Fig. 3: eine Seitenansicht der erfindungsgemässen Laufrolle und
- Fig. 4: einen Schnitt durch die erfindungsgemässe Laufrolle entlang der Linie A-A der Fig. 3.

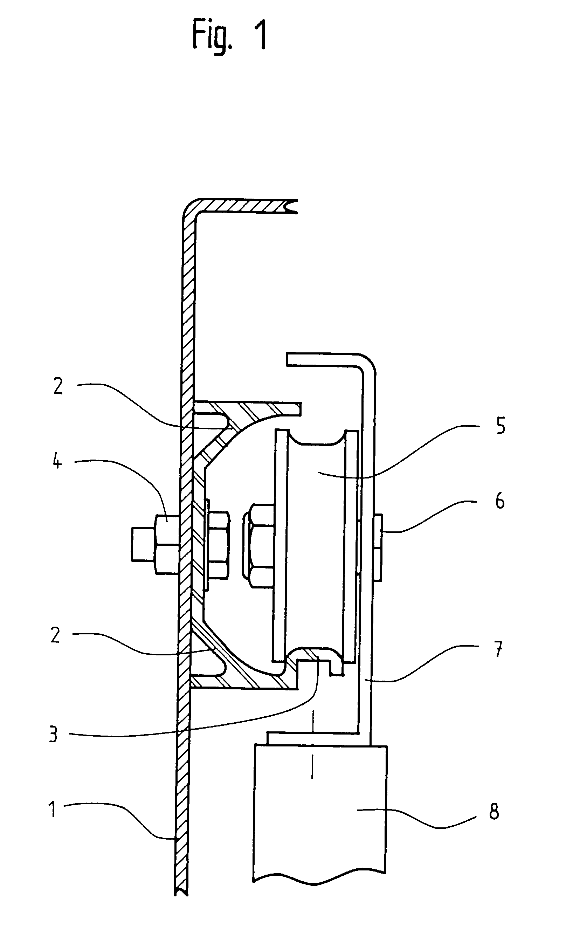

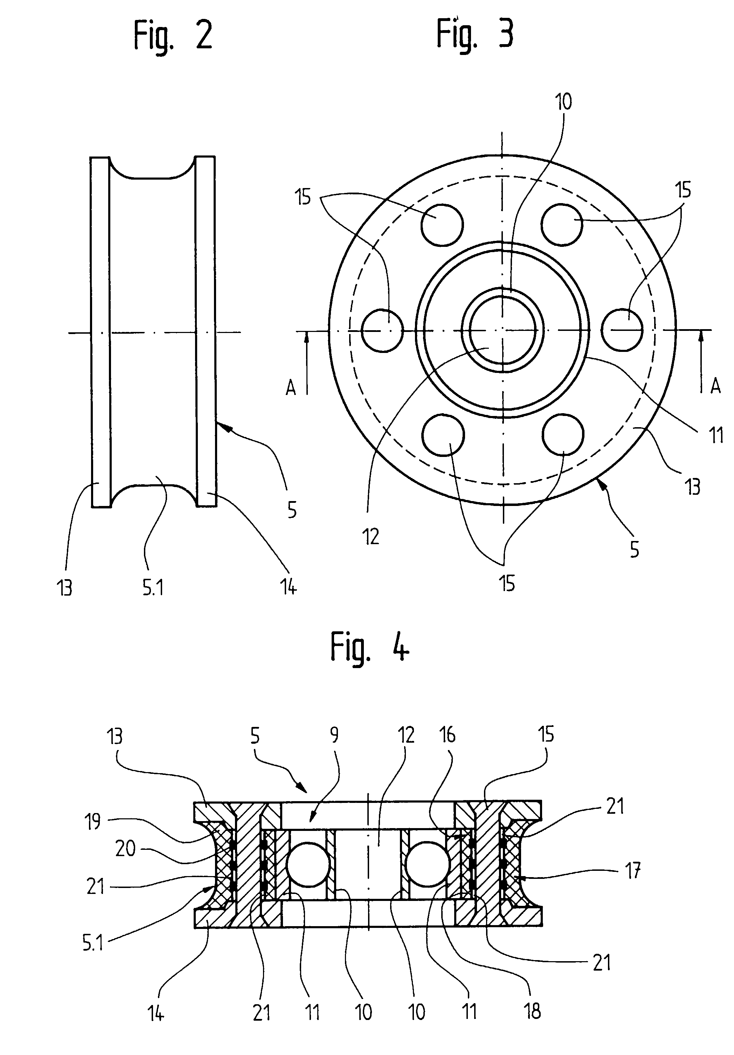

In den Fig. 1 bis 4 ist mit 1 ein Türschild bezeichnet, an dem ein Träger 2 mit einer Rollenbahn 3 mittels einer ersten Schraube 4 befestigt ist. Die Rollenbahn 3 trägt eine Laufrolle 5 mit einem Reifen 5.1, die mittels einer zweiten Schraube 6 mit einem Hängebügel 7 in Verbindung steht. Am Hängebügel 7 ist eine Aufzugsschiebetür 8 angeordnet. Beim Öffnen und Schliessen der Aufzugsschiebetür 8 rollt die Laufrolle 5 auf der Rollenbahn 3.

Die Laufrolle 5 besteht aus einem konzentrisch angeordneten Kugellager 9 mit einem Innenring 10 und einem Aussenring 11 und einer von der zweiten Schraube 6 durchdrungenen Bohrung 12, wobei der Aussenring 11 seitlich von einem ersten ringförmigen Flansch 13 und einem zweiten ringförmigen Flansch 14 überdeckt wird. Die beiden Flansche 13, 14 werden am peripheren Ende von Nieten 15 zusammengehalten, sodass der Aussenring 11 zwischen den Flanschen 13, 14 festgeklemmt wird. Anstelle von Nieten 15 können auch Schrauben verwendet werden. Der periphere Raum zwischen dem Aussenring 11 und den Flanschen 13, 14 wird bei den aus dem Stand der Technik bekannten Laufrollen mit einem Reifen aus Kunststoffmaterial ausgefüllt. Bei der erfindungsgemässen Laufrolle 5 wird in den Reifen 5.1 ein innerer Armierungskäfig 16 und ein äusserer Armierungskäfig 17 in den peripheren Raum eingelegt und dieser mit Kunststoffmaterial ausgefüllt.

Das verwendete Kunststoffmaterial weist in Anbetracht der zu tragenden Last geeignete mechanische Eigenschaften auf, ist aber an sich wenig feuerhemmend. Wegen der verwendeten kleinen Mengen und wegen der Verbindung mit den Armierungskäfigen 16, 17 ist die Laufrolle 5 im Brandfall nicht flammengebend sondern lediglich kohlend. Der innere Armierungskäfig 16 liegt innerhalb der Nieten 15 und soweit vom Aussenring 11 des Kugellagers 9 entfernt, dass Raum für eine minimale erste Schicht 18 aus Kunststoffmaterial zwischen Aussenring 11 und innerem Armierungskäfig 16 offen bleibt. Der äussere Armierungskäfig 17 umfasst die Nieten 15 und wird mit einer minimalen zweiten Schicht 19 aus Kunststoffmaterial überdeckt, wobei die zweite Schicht 19 ein der Rollenbahn 3 entsprechendes Profil aufweist. Zwischen den beiden Armierungskäfigen 16, 17 ist eine dritte nicht dargestellte Schicht aus Kunststoffmaterial angeordnet. Die Schichten 18, 19 dienen als Geräuschdämpfung, die Armierungskäfige 16, 17 hingegen dienen der mechanischen Standfestigkeit. Zur Herstellung der Laufrolle 5 werden in bekannter Weise unter Zuhilfenahme einer Modellplatte sämtliche Bestandteile in eine Giessform gegeben und so während des Einspritzvorganges, bei dem das Kunststoffmaterial in die verbleibenden Hohlräume eingespritzt wird, in ihrer Lage gehalten. Die Armierungskäfige 16, 17 bestehen aus Versteifungsringen 20, welche von Abstandshaltern 21 auseinandergehalten werden. Anstelle der Versteifungsringe 20 können auch gewellte Einlegescheiben verwendet werden, die sich durch ihre Wellenform gegenseitig auseinanderhalten.

## Patentansprüche

1. Laufrolle (5) für eine Schiebetür (8), insbesondere für eine Aufzugsschiebetür, wobei die Laufrolle (5) ein Kugellager (9) aufweist, dessen Innenring (10) in Arbeitsstellung der Laufrolle (5) mit einem die Schiebetür (8) tragenden Hängebügel (7) verbunden ist und wobei die Laufrolle (5) mit dem Aussenring (11) des Kugellagers (9) verbundene Flanschen (13, 14) aufweist, an deren peripheren Enden ein Reifen (5.1) aus Kunststoffmaterial angeordnet ist, wobei der Reifen (5.1) in Arbeitsstellung der Laufrolle (5) beim Öffnen und Schliessen der Schiebetür (8) auf einer Rollenbahn (3) eines an einem Türschild (1) angeordneten Trägers (2) abrollt,
dadurch gekennzeichnet,
dass der Reifen (5.1) mindestens einen Armierungskäfig (16, 17) aufweist.

2. Laufrolle nach Anspruch 1,
dadurch gekennzeichnet,
dass zwischen dem Armierungskäfig (16, 17) und dem Aussenring (11) eine erste Schicht (18) aus Kunststoffmaterial angeordnet ist und
dass der Armierungskäfig (16, 17) von einer zweiten Schicht (19) aus Kunststoffmaterial eingedeckt ist, die an der Oberfläche ein der Rollenbahn (3) entsprechendes Profil aufweist.

3. Laufrolle nach den Ansprüchen 1 und 2,
dadurch gekennzeichnet,
dass ein innerer Armierungskäfig (16) und ein äusserer Armierungskäfig (17) vorgesehen ist, zwischen denen eine dritte Schicht aus Kunststoffmaterial angeordnet ist.

4. Laufrolle nach den Ansprüchen 1 bis 3,
dadurch gekennzeichnet,
dass der Armierungskäfig (16, 17) Versteifungsringe (20) aufweist, die von Abstandshaltern (21) auseinandergehalten werden.

5. Laufrolle nach den Ansprüchen 1 bis 3,
dadurch gekennzeichnet,
dass der Armierungskäfig (16, 17) gewellte Einlegescheiben aufweist, die sich durch ihre Wellenform gegenseitig auseinanderhalten.

## Claims

1. Runner (5) for a sliding door (8), in particular for a sliding lift door, wherein the runner (5) comprises a ball bearing (9), the inner ring (10) of which in the working setting of the runner (5) is connected with a suspension bracket (7) carrying the sliding door (8), and wherein the runner (5) comprises flanges (13, 14), which are connected with the outer ring (11) of the ball bearing (9) and at the peripheral ends of which a tyre (5.1) of synthetic material is arranged, wherein the tyre (5.1) in the working setting of the runner (5) runs along on a rollers track (3) of a carrier (2), which is arranged at a door panel (1), during the opening and closing of the sliding door (8), characterised in that the tyre (5.1) has at least one armouring cage (16, 17).

2. Runner according to claim 1, characterised in that a first layer (18) of synthetic material is arranged between the armouring cage (16, 17) and the outer ring (11) and that the armouring cage (16, 17) is covered by a second layer (19) of synthetic material, which layer at the surface has a profile corresponding with the roller track (3).

3. Runner according to claims 1 and 2, characterised in that an inner armouring cage (16) and an outer armouring cage (17) are provided, between which a third layer of synthetic material is arranged.

4. Runner according to claims 1 to 3, characterised in that the armouring cage (16, 17) has stiffening rings (20), which are kept apart by spacer members (21).

5. Runner according to claims 1 to 3, characterised in that the armouring cage (16, 17) has corrugated washers which keep themselves apart mutually by their wavy.

## Revendications

1. Galet de roulement (5) pour une porte coulissante (8), en particulier pour une porte d'ascenseur coulissante, le galet de roulement (5) comportant un roulement à billes (9) dont la bague intérieure (10) est reliée, dans la position de travail du galet (5), à un étrier de suspension (7) portant la porte coulissante (8), ainsi que des joues (13, 14) qui sont reliées à la bague extérieure (11) du roulement à billes (9) et sur les extrémités périphériques desquelles est disposé un bandage (5.1) en matière plastique, étant précisé que le bandage (5.1), dans la position de travail du galet de roulement (5), lors de l'ouverture et de la fermeture de la porte coulissante (8), roule sur une voie de roulement (3) d'un support (2) disposé sur un panneau de porte (1),
caractérisé en ce que le bandage (5.1) comporte au moins une cage d'armature (16, 17).

2. Galet de roulement selon la revendication 1, caractérisé en ce qu'une première couche (18) de matière plastique est disposée entre la cage d'armature (16, 17) et la bague extérieure (11), et en ce que la cage d'armature (16, 17) est couverte par une deuxième couche (19) de matière plastique qui présente sur sa surface un profil correspondant à la voie de roulement (3).

3. Galet de roulement selon les revendications 1 et 2, caractérisé en ce qu'il est prévu une cage d'armature intérieure (16) et une cage d'armature extérieure (17) entre lesquelles est disposée une troisième couche de matière plastique.

4. Galet de roulement selon les revendications 1 à 3, caractérisé en ce que la cage d'armature (16, 17) comporte des bagues de renforcement (20) qui sont maintenues espacées les unes des autres par des écarteurs (21).

5. Galet de roulement selon les revendications 1 à 3, caractérisé en ce que la cage d'armature (16, 17) comporte des rondelles d'insertion ondulées qui se maintiennent mutuellement espacées les unes des autres grâce à leur forme ondulée.
